# EUROPÄISCHE PATENTSCHRIFT

(11) **EP 1 561 409 B1**
(45) Veröffentlichungstag und Bekanntmachung des Hinweises auf die Patenterteilung: **15.07.2009**
(21) Anmeldenummer: 05100717.7
(22) Anmeldetag: 02.02.2005
(51) Int. Cl.: A47J 43/07, A47J 43/046

(54) **Verfahren zum Zubereiten von Speisen mittels eines Küchengerätes sowie Küchengerät**
Method for preparation of food with a kitchen appliance and kitchen appliance
Procédé pour la préparation d'aliments avec un appareil de cuisine et appareil de cuisine

(30) Priorität: 05.02.2004 DE 102004005607
(43) Veröffentlichungstag der Anmeldung: 10.08.2005
(73) Patentinhaber: Vorwerk & Co. Interholding GmbH, 42275 Wuppertal (DE)
(72) Erfinder: Poppen, Günter, 42477 Radevormwald (DE)
(74) Vertreter: Müller, Enno

(56) Entgegenhaltungen:
- EP-A- 0 356 662
- EP-A- 0 966 909
- US-A- 5 710 409
- US-A1- 2002 001 650
- US-A1- 2002 027 175
- US-A1- 2003 010 221
- US-B1- 6 550 372

## Beschreibung

Die Erfindung betrifft ein Küchengerät mit einem Rührgefäß und einem Rührwerk in dem Rührgefäß, wobei das Rührgefäß aufheizbar ist, wobei weiter für die Steuerung des Küchengerätes ein Mikrocontroller vorgesehen ist.

Bei einem derartigen aus der EP 0966909 A2 bekannten Küchengerät ist es bekannt, mittels eines Sammelsteckers Meldungen des Motors, der Heizung, der Uhr, einer eventuell vorgesehenen Waage usw. bei einer solchen Küchenmaschine abzufragen und auch über diese Schnittstelle gerätespezifische Werte einzustellen bzw. zu kalibrieren. Darüber hinaus ist auf die US 5,710,409 A1 zu verweisen. Hieraus ist es bekannt, zur Speisenzubereitung eine Handprogrammierung vorzunehmen und die gewünschten Werte einzustellen, die dann selbsttätig ablaufen. Zu derartigen Küchengeräten grundsätzlich ist etwa auf die DE 4414823 A1 zu verweisen. Hieraus ist eine Kocheinrichtung bekannt, welche über eine Funkscknittstelle bedient und auch in ihrer Programmierung geändert werden kann. Schließlich ist auf die US 2003/0010221 A1 zu verweisen. Hieraus ist ein Dampfkochgerät bekannt, bei welchem gleichfalls mittels einer Fernsteuerung Parameter vorgegeben, überwacht und geändert werden können.

Ausgehend von dem genannten Stand der Technik stellt sich der Erfindung die Aufgabe, ein hinsichtlich seiner Anwendungsmöglichkeiten und der Betriebssicherheit vorteilhaftes Küchengerät anzugeben.

Diese Aufgabe ist beim Gegenstand des Anspruches 1 gelöst, wobei darauf abgestellt ist, dass das Küchengerät einen zweiten Mikrocontroller aufweist, dem einerseits eine Fernkommunikations-Schnittstelle zugeordnet ist und andererseits einen nichtflüchtigen Speicher zur Fernkommtinikation von Gerätedaten und zur Änderung und Ergänzung von Gerätedaten in Abhängigkeit zu einer Fernkommunikation und dass der erste Mikrocontroller in einem festen Zeitraster alle relevanten Daten an den zweiten Mikrocontroller sendet, die in dem nichtflüchtigen Speicher gespeichert werden.

In dem Küchengerät werden Parameter abrufbar gespeichert, wobei diese Parameter über die Fernverbindung nicht nur abrufbar, sondern auch änderbar sind und darüber hinaus auch zur Einwirkung auf den Zubereitungsprozess abrufbar und änderbar sind. Gegebenenfalls im Zuge der Auswertung der übertragenen Werte können über dieselbe Fernverbindung die Parameter in dem Küchengerät geändert werden, um somit gegebenenfalls auf den Zubereitungsprozess einzuwirken. So kann weiter beispielsweise über einen Temperaturfühler oder dgl. der Temperaturanstieg in einem vorbestimmten Zeitfenster erfasst, gespeichert und fernvermittelt werden. Zur Kontrolle des Zubereitungsprozesses sind insbesondere Kurzzeitdaten erforderlich, welche beispielsweise in einem nicht flüchtigen Ringspeicher aufgezeichnet werden. Dieser Kurzzeit-Datenspeicher kann auch zur Ermittlung von Fehlfunktionen des Küchengerätes genutzt werden, da der Kurzzeit-Datenspeicher den exakten internen Gerätezustand vor Auftreten eines Fehlers oder Ausfalls widerspiegelt. Im Falle einer Fehlerdiagnose des Küchengerätes kann über dieselbe Fernverbindung auch Einfluss auf die Kalibrierung des Küchengerätes genommen werden. Weiter können auch nachträgliche Änderungen von Programmparametern über diese bidirektionale Fernverbindung durchgeführt werden. Ein weiterer wesentlicher Vorteil der Erfindung besteht auch darin, über die Fernverbindung das Küchengerät rezeptabhängig fern zu steuern, wobei von dem Küchengerät gegebenenfalls Temperaturmesswerte und/ oder ermittelte Konsistenzwerte des in dem Rührgefäß befindlichen Guts rückvermittelt werden. Letztere Parameter können wiederum Einfluss auf die Fern-Prozesssteuerung haben.

In einer Weiterbildung des Erfindungsgegenstandes ist vorgesehen, dass der zweite Mikrocontroller und vorzugsweise die Fernkommunikations-Schnittstelle und/oder der nicht flüchtige Speicher auf einer gesonderten Bedienplatine angeordnet sind. Über Letztere ist auch die direkte Steuerung des Küchengerätes durch Benutzereingaben möglich. Weiter kann die Bedienplatine auch zur Anzeige des Gerätezustands dienen. Die Bedienplatine hat in einer bevorzugten Ausgestaltung auch weiter Steuerungsaufgaben, so beispielsweise zur Regelung der Heizung und/oder der Rührwerksdrehzahl. Die Fernkommunikations-Schnittstelle ist bevorzugt eine Infrarot-Schnittstelle, über welche das Küchengerät mit externen Geräten kommunizieren kann. Diese externen Geräte können beispielsweise sämtliche Geräte mit einer Infrarot-Schnittstelle zum Beispiel nach dem weit verbreiteten IrDa-Standard wie Mobiltelefone oder PDAs sein. Ferner sind auch Geräte möglich, die speziell auf die Bedienmöglichkeiten des Küchengerätes zugeschnitten sind. Ausgestattet mit einer Infrarot-Schnittstelle können diese Geräte die Funktionalität des Küchengeräts beispielsweise durch Sprachausgabe oder Sprachsteuerung, Fernsteuerung, Programmierung kompletter Anweisungsfolgen wie Rezepte, Anpassung interner Parameter an die jeweilige Applikation und Auswertung und Weiterverarbeitung von Messwerten erweitern. Auch ist vorgesehen dass die Fernkommunikations-Schnittstelle eine Funk-Schnittstelle ist, womit insbesondere die bevorzugte Infrarot-Schnittstelle in ihrer Reichweite erweitert werden kann. Je nach verwendeter Fernübertragungstechnologie besteht die Möglichkeit zur Kommunikation mit Haustelefonen nach DECT-Standard, beispielsweise zur Benachrichtigung bei Ablauf einer Rezeptfolge, zur Sprachausgabe des Gerätezustandes oder auch zur Sprechsteuerung. Darüber hinaus auch zur Kommunikation mit einem Mobiltelefon.

Hat der Benutzer die Küchenmaschine mit einem vorprogrammierten Zubereitungsprozess aktiviert, so kann dieser hiernach auch in Abwesenheit über die Fernverbindung den aktuellen Status und die bereits abgelaufenen Teilprozesse abrufen. Erscheint beispielsweise der erwähnte Temperaturanstieg im vordefinierten Zeitfenster zu groß, so kann der Benutzer über die Fernverbindung beispielsweise den Prozess stoppen oder in einen Wartezustand verbringen. Weiter ist nach Auswertung der Daten auch beispielsweise eine Aktivierung des Rührwerks denkbar. Zur Kontrolle des Zubereitungsprozesses sind insbesondere Kurzzeitdaten erforderlich, welche beispielsweise in dem nicht flüchtigen Ringspeicher aufgezeichnet werden.

Im Hinblick auf eine Ermittlung von Fehlfunktionen wird jeweils der Gerätezustand über eine vorbestimmte Zeitdauer von bspw. dreißig Sekunden im Raster von zwei Sekunden aufgezeichnet. Auch kann das Verfahren beispielsweise im Rahmen einer Testreihe des Küchengeräts in mehreren örtlich voneinander getrennten Testküchen Aufschluss über die typische Nutzung und deren Dauer geben, so unter anderem wichtige Gesamtbetriebszeiten des Geräts, Punktionen, die besonders häufig oder eher selten verwendet werden. Im Falle einer Fehlerdiagnose des Küchengerätes kann über dieselbe Fernverbindung auch Einfluss auf die Kalibrierung des Küchengeräts genommen werden. Weiter können auch nachträgliche Änderungen von Programmparametern über diese bidirektionale Fernverbindung durchgeführt werden. Die Fernverbindung kann mittels einer Infrarot-Schnittstelle hergestellt sein, welche die Kommunikation beispielsweise mit einem Auswertegerät bzw. mit einem Steuergerät übernimmt. Weiter kann die Fernverbindung auch mittels einer Funk-Schnittstelle hergestellt sein. Bevorzugt wird diesbezüglich zur Erweiterung der Reichweite der infrarot Schnittstelle eine Umwandlungseinheit, welche die Infrarotsignale in FunkSignale wandelt. Diese Umwandlungseinheit kann in dem Küchengerät integriert oder auch in Sichtweite desselben installiert sein. Je nach verwendeter Funkübertragungstechnologie besteht die Möglichkeit zur Kommunikation mit einem externen System, so beispielsweise mit einem Haustelefon nach DECT-Standard zur Benachrichtigung beispielsweise bei Ablauf einer Rezeptfolge oder auch zur Sprachausgabe des Gerätezustandes oder auch zur Sprachsteuerung, wodurch auch eine Nutzbarkeit des Küchengerätes für Blinde und Sehbehinderte erreicht ist. Des Weiteren kann auch eine Funk-Kommunikation mit einem Mobiltelefon erfolgen.

Hat der Benutzer, die Küchenmaschine mit einem vorprogrammierten Zubereitungsprozess aktiviert, so kann dieser hiernach auch in Abwesenheit über die Fernverbindungden aktuellen Status und die bereits abgelaufenen Teilprozesse abrufen. Erscheint beispielsweise der erwähnte Temperaturanstieg im vordefinierten Zeitfenster zu groß, so kann der Benutzer über die Fernverbindung beispielsweise den Prozess stoppen oder in einen Wartezustand verbringen. Weiter ist nach Auswertung der Daten auch beispielsweise eine Aktivierung des Rührwerks denkbar.

Über die Fernverbindung kann das Küchengerät rezeptabhängig ferngesteuert werden, wobei von dem Küchengerät gegebenenfalls Temperaturmesswerte und/ oder ermittelte Konsistenzwerte des in dem Rührgefäß befindlichen Guts rückvermittelt werden. Letztere Parameter können wiederum Einfluss auf die Fern-Prozesssteuerung haben.

Nachstehend ist die Erfindung anhand der beigefügten Zeichnungen, welche lediglich ein Ausführungsbeispiel darstellen, näher erläutert. Es zeigt:
- Fig. 1: eine Seitenansicht gegen ein erfindungsgemäßes Küchengerät;

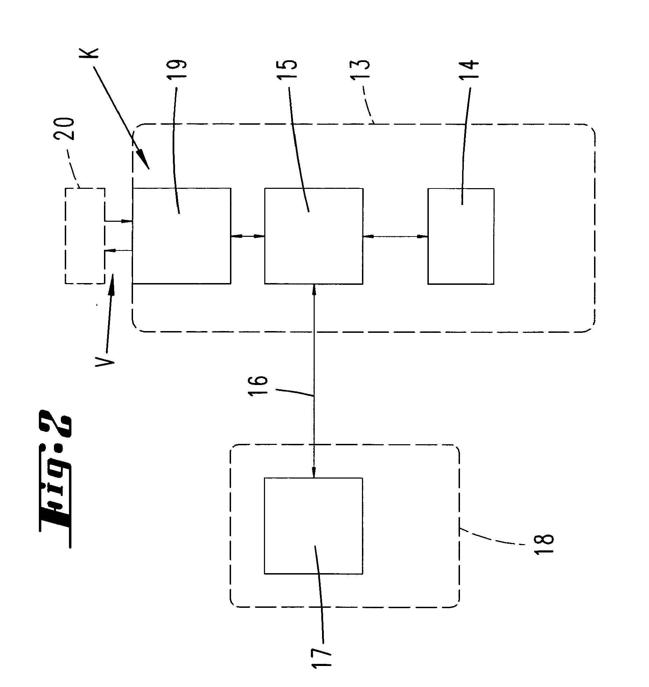

- Fig. 2: ein erstes Blockschaltbild, die Kommunikation innerhalb des Küchengeräts betreffend;

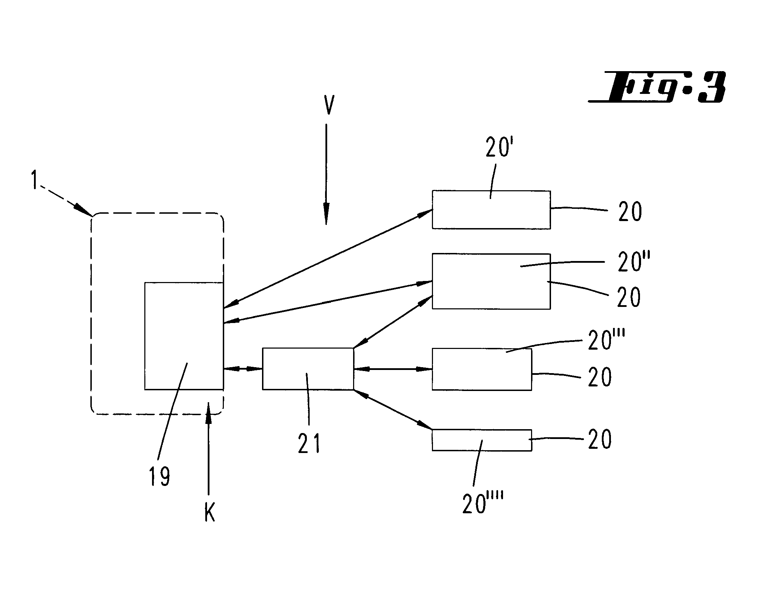

- Fig. 3: ein zweites Blockschaltbild, die Fernkommunikation zwischen dem Küchengerät und einem externen Gerät betreffend.

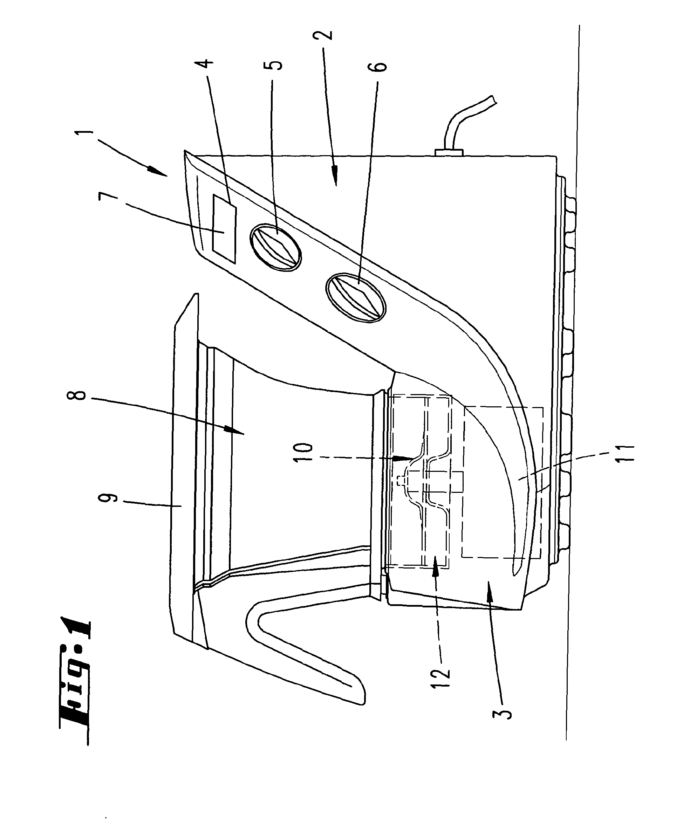

Das in Fig. 1 dargestellte Küchengerät 1 setzt sich im Wesentlichen aus einem Bedien-/ Steuerungsbereich 2 und einem Aufnahme-/ Arbeitsbereich 3 zusammen. Letztere ist topfförmig ausgebildet. An diesem Bereich ist der Bedien-/ Steuerungsbereich 2 angeformt, welcher eine um ca. 60° nach oben geneigte Bedienfläche 4 aufweist. In dieser Bedienfläche 4 sind in dem dargestellten Ausführungsbeispiel zwei Drehschalter 5, 6 angeordnet. Des Weiteren ist in diesem Bereich ein Display 7 positioniert, zur Anzeige verschiedener Parameter, wie beispielsweise Temperatur, Rührwerksaktivierung, Rührwerksdrehzahl oder auch gegebenenfalls Gewichtsangaben.

In dem Aufnahme-/ Arbeitsbereich 3 ist ein kannenartiges Rührgefäß 8 halterbar, dessen nach oben weisende Öffnung mittels eines abnehmbaren Deckels 9 verschlossen ist.

Des Weiteren ist in dem Rührgefäß 8 bodenseitig ein Rührwerk 10 angeordnet, welches über einen in dem Aufnahme-/ Arbeitsbereich 3 angeordneten Elektromotor 11 antreibbar ist.

Das Rührgefäß 8 ist im Bodenbereich aufheizbar, wozu in dem Aufnahme / Arbeitsbereich 3 ein den Bodenbereich des Rührgefäßes 8 beaufschlagendes Elektro-Heizelement 12 vorgesehen ist.

Über den Drehschalter 5 ist das Rührwerk 10 ein- und ausschaltbar und darüber hinaus in der Drehzahl regulierbar. Der Drehschalter 6 dient zur Leistungssteuerung des Elektro-Heizelements 12, womit über den Drehschalter 6 die Temperatur einstellbar ist.

Die Rührwerkaktivierung und die Temperatureinwirkung sind in ihrer Zeitdauer voreinstellbar.

Erfindungsgemäß sind die Parameter Temperatur, Zeitdauer einer Temperatureinwirkung und Rührwerksaktivierung einschließlich deren Zeitdauer und gegebenenfalls darüber hinaus auch die Benutzereingaben in dem Küchengerät abspeicherbar. Hierzu ist auf einer in dem Küchengerät 1 integrierten Bedienplatine 13 ein nicht flüchtiger Speicher 14 angeordnet, welcher über einen gleichfalls auf der Bedienplatine 13 angeordneten Mikrocontroller 15 beschrieben und auch ausgelesen wird.

Über die Bedienplatine 13 erfolgt auch die Anzeige des Gerätezustands auf dem Display 7 sowie die Regelung des Elektro-Heizelements 12 und/ oder des Rührwerks 10.

Der Mikrocontroller 15 steht über eine Kommunikationsleitung 16 mit einem weiteren Mikrocontroller 17 in Verbindung, welch Letzterer auf einer Leistungsplatine 18 angeordnet ist. Diese Leistungsplatine 18 dient der Spannungsversorgung sowie der Motor- und Heizungssteuerung.

Die Elektronik des Küchengeräts 1 besteht somit hauptsächlich aus zwei Platinen 13, 18, mit jeweils einem eigenen Mikrocontroller 15, 17 zur Steuerung der Kernfunktionen. Die Kommunikation zwischen den beiden Platinen 13,18 erfolgt über eine serielle Verbindungsleitung 16 zwischen dem Controller 15 und 17. Der Mikrocontroller 17 der Leistungsplatine 18 sendet in einem festen Zeitraster alle relevanten Daten an den Mikrocontroller 15 der Bedienplatine 13. Diese speichert diese Daten und zusätzlich die Daten der Bedienelektronik in den nicht flüchtigen Speicher 14. Es lassen sich prinzipiell zwei unterschiedliche Kategorien von Daten unterscheiden, die gespeichert werden. Zum einen Kurzzeit-Daten, welche den exakten internen Gerätezustand innerhalb eines vorbestimmten kurzen Zeitfensters widerspiegeln. Hierbei ist jeweils bevorzugt der Gerätezustand der letzten dreißig Sekunden in einem Raster von zwei Sekunden in einem Ringspeicher aufgezeichnet. Denkbar ist auch die Erfassung von Kurzzeitdaten über einen längeren Zeitraum von beispielsweise fünf bis zehn Minuten, um hierüber beispielsweise den Prozessablauf innerhalb dieses Zeitfensters widerzuspiegeln. Zum Weiteren werden auch Langzeitdaten erfasst, welche beispielsweise wichtige Gesamtbetriebszeiten des Gerätes enthalten.

Die gespeicherten Parameter sind über eine Fernverbindung V abrufbar. Hierzu weist das Küchengerät 1 auf der Bedienplatine 13 eine Fernkommunikations-Schnittstelle K in Form einer Infrarot-Schnittstelle 19 auf. Über diese Fernverbindung V steht das Küchengerät 1 in bidirektionaler Verbindung mit einem Auswertegerät 20. Über dieses Auswertegerät 20 sind die gespeicherten Parameter abrufbar und auch änderbar. So kann beispielsweise bei einer Ferndiagnose eine Nachkalibrierung des Küchengeräts 1 erfolgen. Weiter ist über die Fernverbindung V auch die Einwirkung auf den Zubereitungsprozess ermöglicht, so dass die von dem Auswertegerät 20 erfassten Parameter zu einer Änderung der Prozessfolge führen kann. Das Auswertegerät 20 kann über die Fernverbindung V Parameter wie beispielsweise Temperatureinwirkung und/ oder Rührwerksdrehzahlen angepasst an die ermittelten Werte ändern oder auch darüber hinaus den Zubereitungsprozess stoppen bzw. in einem Wartezustand verbringen.

Das externe Auswertegerät 20 kann ein übliches Gerät mit einer Infrarot - Schnittstelle sein, so beispielsweise ein Mobiltelefon oder PDA (Bezugszeichen 21') nach IrDa-Standard.

Ferner sind auch Geräte (Bezugszeichen 20"), die speziell auf die Bedienmöglichkeiten des Küchengeräts 1 zugeschnitten sind als Auswertegeräte 20 denkbar. Ausgestattet mit einer Infrarot-Schnittstelle können diese Geräte die Funktionalität des Küchengeräts 1 dahingehend erweitern, dass zum Beispiel eine Sprachausgabe oder Sprachsteuerung bzw. eine Fernsteuerung erreicht ist. Auch ist die Programmierung kompletter Anweisungsfolgen (Rezepte) über eine derartige Fernverbindung ermöglicht. Auch eine Anpassung interner Parameter an jeweilige Applikation und die Auswertung und Weiterverarbeitung von Messwerten, wie beispielsweise Temperaturanstieg innerhalb eines bestimmten Zeitfensters oder auch der ermittelte Wert einer Waageneinrichtung können über diese Fernübertragung erfolgen.

Die Infrarot-Schnittstelle 19 des Küchengerätes 1 kann insbesondere in ihrer Reichweite erweitert werden durch eine Funk-Schnittstelle 21, die am Küchengerät 1 befestigt bzw. in diesem integriert ist oder sich in Sichtweite des Küchengeräts 1 befindet Je nach verwendeter Funkübertragungstechnologie besteht die Möglichkeit zur Kommunikation mit externen Systemen, so beispielsweise mit einem spezifischen Ausgabe-/Steuerungsgerät mit Sprachausgabe und Spracherkennung (Bezugszeichen 20"), einem Haustelefon nach DECT-Standard (Bezugszeichen 20'") beispielsweise zur Benachrichtigung bei Ablauf einer Rezeptfolge oder auch mit einem Mobiltelefon (Bezugszeichen 20"").

Durch die Kommunikation des Küchengeräts 1 mit Hilfe der Fernkommunikations-Schnittstelle ergeben sich vorteilhafte Möglichkeiten, so beispielsweise die Fernsteuerung des Küchengeräts 1, die Erweiterung der Funktionalität, die Realisierung komplexer Steuerungsfolgen sowie die Fernwartung des Küchengeräts 1. Darüber hinaus erweist sich insbesondere die Kommunikation mit einem Ausgabe-/ Steuerungsgerät mit Sprachausgabe und Spracherkennung dahingehend als vorteilhaft, dass hierdurch auch die Nutzbarkeit eines derartigen chengeräts 1 für Blinde und Sehbehinderte erreicht ist.

## Patentansprüche

1. Küchengerät (1) mit einem Rührgefäß (8) und einem Rührwerk (10) in dem Rührgefäß (8), wobei das Rührgefäß (8) aufheizbar ist, wobei weiter für die Steuerung des Küchengeräts (1) ein Mikrocontroller (17) vorgesehen ist, **dadurch gekennzeichnet, dass** das Küchengerät einen zweiten Mikrocontroller (15) aufweist, dem einerseits eine Fernkommunikations-Schnittstelle (K) zugeordnet ist und andererseits ein nicht flüchtiger Speicher (14) zur Fernkommunikation von Gerätedaten und zur Änderung oder Ergänzung von Gerätedaten in Abhängigkeit zu einer Fernkommunikation und dass der erste Mikrocontroller in einem festen Zeitraster alle relevanten Daten an den zweiten Mikrocontroller sendet, die in dem nicht flüchtigen Speicher (14) gespeichert werden.

2. Küchengerät nach Anspruch 1, **dadurch gekennzeichnet, dass** der zweite Mikrocontroller (15) und vorzugsweise die Fernkommunikations-Schnittstelle (K) und/oder der nicht flüchtige Speicher (14) auf einer gesonderten Bedienplatine (13) angeordnet sind.

3. Küchengerät nach einem der Ansprüche 1 oder 2, **dadurch gekennzeichnet, dass** die Fernkommunikations-Schnittstelle (K) eine Infrarot-Schnittstelle (19) ist.

4. Küchengerät nach einem der Ansprüche 1 oder 2, **dadurch gekennzeichnet, dass** die Fernkommunications-Schnittstelle (K) eine Funk-Schnittstelle (21) ist.

## Claims

1. Kitchen appliance (1) having a mixing vessel (8) and a stirrer (10) in the mixing vessel (8), the mixing vessel (8) being heatable, furthermore a microcontroller (17) being provided for control of the kitchen appliance (1), **characterised in that**:
the kitchen appliance has a second microcontroller (15), with which there is associated on the one hand a remote communication interface (K) and on the other hand a non-volatile memory (14) for remote communication of appliance data and for changing or supplementing appliance data in dependence on a remote communication, and **in that** the first microcontroller sends all relevant data to the second microcontroller in a fixed time slot, this data being stored in the non-volatile memory (14).

2. Kitchen appliance according to Claim 1 **characterised in that**:
the second microcontroller (15) and preferably the remote communication interface (K) and/or the non-volatile memory (14) are located on a separate control panel (13).

3. Kitchen appliance according to either of Claims 1 or 2, **characterised in that**:
the remote communication interface (K) is an infrared interface (19).

4. Kitchen appliance according to either of Claims 1 or 2, **characterised in that**:
the remote communication interface (K) is a radio interface (21).

## Revendications

1. Appareil de cuisine (1) avec une cuve d'agitation (8) et une unité d'agitation (10) dans la cuve d'agitation (8), la cuve d'agitation (8) pouvant être chauffée, un microcontrôleur (17) étant en outre prévu pour la commande de l'appareil de cuisine (1), **caractérisé en ce que** l'appareil de cuisine comprend un deuxième microcontrôleur (15), avec lequel est associé, d'une part, une interface de communication à distance (K) et, d'autre part, une mémoire non-volatile (14) pour la communication à distance de données concernant l'appareil et pour modifier ou compléter des données concernant l'appareil en fonction d'une communication à distance, et **en ce que** le premier microcontrôleur envoie au deuxième microcontrôleur, dans un schéma temporel fixe, toutes les données appropriées qui sont stockées dans la mémoire non-volatile (14).

2. Appareil de cuisine selon la revendication 1, **caractérisé en ce que** le deuxième microcontrôleur (15) et, de préférence, l'interface de communication à distance (K) et/ou la mémoire non-volatile (14) sont agencés sur une platine de commande séparée (13).

3. Appareil de cuisine selon l'une des revendications 1 ou 2, **caractérisé en ce que** l'interface de communication à distance (K) est une interface infrarouge (19).

4. Appareil de cuisine selon l'une des revendications 1 ou 2, **caractérisé en ce que** l'interface de communication à distance (K) est une interface radio (21).
